# EUROPEAN PATENT SPECIFICATION

(11) **EP 3 003 072 B1**
(45) Date of publication and mention of the grant of the patent: **03.07.2024**
(21) Application number: 14733357.9
(22) Date of filing: 28.05.2014
(51) Int. Cl.: B01J 20/04, B01J 20/28, B01J 20/30, C01B 32/354, C01B 32/372, A24D 3/16, B01J 20/20, B01J 20/32

(54) **FUNCTIONALIZED MATERIAL FOR SELECTIVE REMOVAL OF SMOKE CONSTITUENTS**
FUNKTIONALISIERTES MATERIAL ZUR SELEKTIVEN ENTFERNUNG VON RAUCHBESTANDTEILEN
MATÉRIAU FONCTIONNALISÉ POUR L'ÉLIMINATION SÉLECTIVE DE CONSTITUANTS DE FUMÉE

(30) Priority: 31.05.2013 US 201361829451 P; 31.05.2013 EP 13169980
(43) Date of publication of application: 13.04.2016
(73) Proprietor: Philip Morris Products S.A., 2000 Neuchâtel (CH)
(72) Inventor: COUDERC, Gaetan, CH-2034 Peseux (CH); BAUR, Guillaume, Station 6 CH-1015 Lausanne (CH); IOURANOV, Igor, Station 6 CH-1015 Lausanne (CH); KIWI, Lioubov, Station 6 CH-1015 Lausanne (CH)
(74) Representative: Nevett, Duncan
(86) International application number: PCT/IB2014/061780
(87) International publication number: WO 2014/191932

(56) References cited:
- WO-A2-2007/072231
- US-A1- 2010 122 708
- LEBODA R ET AL: "Effect of calcium catalyst loading procedure on the porous structure of active carbon from plum stones modified in the steam gasification process", CARBON, ELSEVIER, OXFORD, GB, vol. 36, no. 4, 1 January 1998 (1998-01-01), pages 417-425, XP004127678, ISSN: 0008-6223, DOI: 10.1016/S0008-6223(97)00221-2
- DABROWSKI A ET AL: "Steam-carbon gasification catalyzed by calcium: Assessment of the porous structure of active carbons from plum stones and synthetic active carbons", ADSORPTION, KLUWER ACADEMIC PUBLISHERS, BO, vol. 3, no. 3, 1 January 1997 (1997-01-01) , pages 233-242, XP002569358, ISSN: 1572-8757, DOI: 10.1007/BF01650134

## Description

This disclosure relates to smoking articles having a filter containing functionalized material for selective removal of smoke constituents.

Combustible smoking articles, such as cigarettes, typically have shredded tobacco surrounded by a paper wrapper forming a tobacco rod. A cigarette is employed by a smoker by lighting one end of the cigarette and burning the tobacco rod. The smoker then receives mainstream smoke by drawing on the opposite end or mouth end of the cigarette, which typically contains a filter. The filter typically includes, or is made essentially from, cellulose acetate tow or other filtration material. Cellulose acetate tow acts to filter tobacco constituents in the particulate phase in a non-selective manner. Filters containing activated carbon are known and are employed to increase filtering efficiency, in particular for gas phase smoke constituents. However, activated carbon also tends to filter gas phase smoke constituents in a relatively non-selective manner.

Other known smoking articles may also include a filtration element. For example, smoking articles, which generate an aerosol by electrical heating or by the transfer of heat from a combustible fuel element or heat source to an aerosol generating substrate, may include a filtration element. By way of further example, smoking articles in which a nicotine-containing aerosol is generated from a tobacco material, tobacco extract, or other nicotine source, without combustion, and in some cases without heating, for example through a chemical reaction may also include a filtration element.

US 2010/122708 A1 describes a modified adsorbent material impregnated with a metal oxide, which can be used in a filter element adapted for use in a smoking article. In more detail, US 2010/122708 A1 proposes impregnating the adsorbent material with a metal oxide with a view to increasing the mesopore volume of the adsorbent material. The metal oxide may be in the form of a metal salt or an organic metal compound capable of thermal decomposition to form a metal oxide. A preferred metal oxide is cerium oxide. US 2010/122708 A1 teaches that impregnation of the adsorbent material with a metal oxide also results in an increase in the total BET surface area.

WO 2007/072231 A2 describes the incorporation metal-containing nanowires in the filter of a smoking article. According to WO 2007/072231 A2, the metal-containing nanowires are capable of removing at least one constituent from tobacco smoke. The metal-containing nanowires may comprise any suitable metal, metal oxide or mixtures thereof. For example, the metal-containing nanowires may comprise at least one transition metal or metal oxide thereof selected from one or more of a transition or lanthanide metal or a metalloid atom and mixtures thereof.

Ways of modifying the structure and properties of activated carbon have been discussed by Leboda R. et al in "Effect of calcium catalyst loading procedure on the porous structure of active carbon from plum stones modified in the steam gasification process" and by Dabrowski A. et al in "Steam-carbon gasification catalyzed by calcium: Assessment of the porous structure of active carbons from plum stones and synthetic active carbons".

Non-selective filtering of smoke constituents may lead to filtering of components that provide flavour or other sensory effects associated with smoking, therefore muting the smoking experience. Accordingly, it would be desirable to provide a smoking article that includes a filter that selectively reduces concentrations of certain smoke constituents in mainstream smoke that is delivered to a user.

According to an aspect of the present disclosure, there is provided a combustible smoking article that includes a tobacco substrate and a filter for capturing one or more constituents when the tobacco substrate is burned. The filter includes activated carbon material functionalized with a metal oxide. The metal oxide is a Group II metal oxide. The metal oxide functionalized activated carbon fibres have a decreased BET surface area relative to a BET surface area of an activated carbon fibre starting material. The Group II metal oxide is selected from the group consisting of MgO and CaO. The metal oxide is present on the activated carbon fibres in a range from about 2% by weight to about 10% by weight. The functionalized activated carbon fibres have an adsorption capacity for acetaldehyde of about 5 w/w% or greater.

As described in more detail below, Group II metal oxide functionalization of activated carbon material enhances the ability of a filter containing the material to selectively reduce levels of certain constituents, such as aldehydes (for example, acetaldehyde), in mainstream smoke. When used in conjunction with other filters or filter materials that selectively remove other constituents of mainstream smoke, the metal oxide-functionalized activated carbon material described herein may allow for tailored, rather than non-selective, removal of smoke constituents.

According to another aspect, there is provided a process for preparing a metal oxide-functionalized activated carbon material for use in a filter of a combustible smoking article. The method includes contacting an activated carbon fibre starting material with a Group II metal oxide, or a precursor thereof, and heating the activated carbon fibre starting material with the metal oxide, or precursor thereof, in a manner and degree sufficient to functionalize the activated carbon fibre material with the metal oxide. The metal oxide functionalized activated carbon fibres have a decreased BET surface area relative to a BET surface area of the activated carbon fibre starting material. The Group II metal oxide is selected from the group consisting of MgO and CaO or the precursor is configured to result in one of MgO and CaO. The metal oxide is present on the activated carbon fibres in a range from about 2% by weight to about 10% by weight. The functionalized activated carbon fibres have an adsorption capacity for acetaldehyde of about 5 w/w% or greater.

As used herein, "functionalized" activated carbon material means that a compound, composition, particle or the like with which the activated carbon is functionalized integrates with the activated carbon material. Without intending to be bound by theory, it is believed that metal oxide particles are impregnated within activated carbon material to produce metal-oxide functionalized activated carbon material. The metal oxide-functionalized activated carbon material may be dispersed in a filtration material in a filter of a smoking article, or the material may form a portion of the filter, for example a segment of the filter.

A smoking article described herein includes a filter downstream of a tobacco substrate. As used herein, "downstream" is defined relative to air flow during use of the smoking article, with the mouth end of the article being the downstream end through which air and smoke is drawn by the user. The end opposite the mouth end is the upstream end. A filter may comprise a single segment, or it may comprise two or more segments that may be the same or different in terms of size, shape, materials, and the like.

As used herein, "tobacco substrate" is a material comprising tobacco or a component of tobacco. Non-limiting examples of "tobacco" include tobacco leaf, tobacco stems, tobacco flower, fragments of tobacco ribs, homogenized tobacco, reconstituted tobacco, processed tobacco, extruded tobacco and expanded tobacco. A tobacco substrate may be a tobacco rod in a cigarette or other combustible smoking article, or may be a substrate for generation of an aerosol without combustion or, in some cases, without heating.

Metal oxide-functionalized activated carbon material for incorporation into a filter may be in any suitable form. As described briefly above, the metal oxide-functionalized activated carbon is in the form of activated carbon fibres. Activated carbon fibres may be woven or nonwoven fibres, for example in the form of a sheet or a felt material, or the fibres may be formed into the shape of a portion of the filter, for example a filter segment, as further discussed below. The fibres may be substantially aligned in the longitudinal direction of the filter and, in some cases, may extend along substantially the entire length of the plug of fibrous filtration material in which they are located. Alternatively, the fibres in the fibrous filtration material may be randomly oriented and extend less than the entire length of the plug of fibrous filtration material.

Functionalized activated carbon material may be incorporated into a filter in any suitable manner. For example, it may be dispersed in a filtration material in a segment of a filter of a smoking article, or the material may form a portion of the filter, for example a segment of the filter. In embodiments, the filter includes cellulose acetate tow as a filtration material and the functionalized activated carbon material is dispersed amongst fibres of the tow. Functionalized activated carbon fibres, granules, or both fibres and granules may be dispersed amongst fibres of the tow. In embodiments, functionalized activated carbon material such as functionalized activated fibres, granules, or both fibres and granules are provided within a cavity of portion of the filter. When the functionalized activated carbon material is provided in a cavity of the filter, the filter can include a filter segment upstream of the cavity and a filter segment downstream of the cavity to help to contain the functionalized activated carbon material within the cavity, particularly when the functionalized activated carbon material comprises granules. In embodiments, functionalized activated carbon material is incorporated into or onto a wrapper, or portion thereof, of a smoking article. Examples of wrappers into or onto which functionalized activated carbon material may be incorporated are cigarette paper, tipping paper, and plug wrap. Preferably, functionalized activated carbon material is incorporated into or on tipping paper, a plug wrap, or both tipping paper and a plug wrap.

When incorporated into or onto a wrapper or paper component of a smoking article, functionalized activated carbon material may be applied during the paper manufacturing process, during the smoking article manufacturing process, or at any other suitable step in the smoking article production process. The functionalized activated carbon process may be incorporated into the paper, coated on or otherwise applied to the paper, or the like. Preferably the functionalized activated carbon material is incorporated into or onto a surface of the paper component that will serve as an inner surface when the paper component is assembled into the smoking article.

In addition, or in the alternative, functionalized activated carbon fibres may be incorporated into a smoking article in any other suitable forms. For example, functionalized activated carbon fibres may be formed into a fibre, thread, disc, sheet, or the like, or functionalized activated carbon granules may be included in a fibre, thread, disc, sheet, or the like. A thread comprising activated carbon material may be incorporated into a cellulose acetate tow or other filter material as a thread incorporated into a segment of the filter, for example in the center of the segment. A sheet comprising activated carbon material may be wrapped around cellulose acetate tow or other filter material, may serve as a plug wrap for the filter. A disc of a sheet material comprising activated carbon material may be included in a filter adjacent one or more filter segments, for example between two filter segments.

Metal oxide-functionalized activated carbon material for use in filters of smoking articles may have any suitable pores size, pore size distribution, or Brunauer -Emmett-Teller (BET) surface area. Without intending to be bound by theory, it is believed that pore size, pore size distribution and BET surface area of activated carbon material may affect filtering efficiency. In embodiments, BET surface area of metal oxide-functionalized activated carbon material is about 1000 m²/g or greater. Preferably, the BET surface area is about 1100 m²/g or greater. More preferably, the BET surface area is about 1200 m²/g or greater. Even more preferably, the BET surface area is about 1400 m²/g or greater. In addition, or in the alternative, the BET surface area is about 2100 m²/g or less. For example, the BET surface area may be less than about 2000 m²/g, such as less than about 1800 m²/g or less than about 1500 m²/g. In embodiments, the BET surface of metal-oxide functionalized activated carbon material is preferably from about 1000 m²/g to about 2000 m²/g, more preferably from about 1000 m²/g to about 1800 m²/g, most preferably from about 1000 m²/g to about 1500 m²/g. In embodiments, the BET surface of metal-oxide functionalized activated carbon material is preferably from about 1000 m²/g to about 2100 m²/g, more preferably from about 1200 m²/g to about 2100 m²/g, most preferably from about 1400 m²/g to about 2000 m²/g.

In embodiments, the mean pore size of metal oxide-functionalized activated carbon material is about 20 nm or less. Preferably, the mean pore size of metal oxide-functionalized activated carbon material is about 10 nm or less. More preferably, the mean pore size of metal oxide-functionalized activated carbon material is about 5 nm. Generally, the mean pore size of metal oxide-functionalized activated carbon material is about 0.3 nm or greater, preferably about 0.5 nm or greater, more preferably about 1 nm or greater. In embodiments, the mean pore size of metal oxide-functionalized activated carbon material is preferably from about 0.3 nm to about 20 nm, more preferably from about 0.5 nm to about 10 nm.

In embodiments, the ratio of micropores to mesopores in the metal oxide-functionalized activated carbon material is about 2:1 or less. For purposes of the present disclosure, "micropores" means having a pore size of 2 nm or less, "mesopores" means having a pore size of 2 nm to 50 nm, and "macropores" means having a pore size above 50 nm. Preferably, the ratio of micropores to mesopores in the metal oxide-functionalized activated carbon material is about 1.5:1 or less. In addition, or in the alternative, the ratio of micropores to mesopores is preferably about 0.1:1 or greater, more preferably about 0.25:1 or greater and most preferably about 0.5:1 or greater. The micropore to mesopore ratio may be from about 0.25:1 to about 2:1, preferably from about 0.5:1 to about 1.5:1.

The process of metal oxide functionalization of activated carbon material may result in decreased pore size or BET surface area, a different pore size distribution, or combinations thereof, relative to the activated carbon starting material. Accordingly, it may be desirable for the activated carbon starting material to have a different BET surface area, mean pore size, a different pore size distribution, or combinations thereof, compared to the resulting metal-oxide functionalized activated carbon material. As described briefly above, in a combustible smoking article according to the present invention the metal oxide functionalized activated carbon fibres have a decreased BET surface area relative to a BET surface area of an activated carbon fibre starting material. In embodiments, the BET surface area of the starting material is about 1000 m²/g or greater; preferably about 1500 m²/g or greater; more preferably about 1700 m²/g or greater; even more preferably about 2100 m²/g or greater. In addition, or in the alternative, the BET surface area of the starting material is preferably less than about 2500 m²/g; more preferably less than about 2400 m²/g; most preferably less than about 2200 m²/g. In embodiments, the BET surface area of the starting material is less than about 1900 m²/g. In embodiments, the BET surface area of the starting material is from about 1000 m²/g to about 2500 m²/g. Preferably, the BET surface area of the starting material is from about 1500 m²/g to about 2200 m²/g. More preferably, the BET surface area of the starting material is from about 1700 m²/g to about 1900 m²/g or is from about 1700 m²/g to about 2200 m²/g.

In embodiments, the activated carbon starting material has a BET surface area of from about 1700 m²/g to about 1900 m²/g, and a resulting metal oxide functionalized activated carbon material has a BET surface area of from about 1100 m²/g to about 1600 m²/g. In embodiments, the resulting metal oxide functionalized activated carbon material has a BET surface area of from about 1200 m²/g to about 1400 m²/g. Preferably, the resulting metal oxide functionalized activated carbon material has a BET surface area of from about 1400 m²/g to about 2000 m²/g. The resulting metal oxide functionalized activated carbon starting material may have a BET surface area that is at least 200 m²/g lower than the BET surface area of the activated carbon starting material.

In embodiments, the mean pore size of activated carbon starting material is about 10 nm or less. Preferably, the mean pore size of activated carbon starting material is about 5 nm or less. More preferably, the mean pore size of activated carbon starting material is about 2 nm or less, such as about 1.5 nm or less. Generally, the mean pore size of activated carbon starting material is about 0.3 nm or greater, such as about 0.5 nm or greater, or about 1 nm or greater. In embodiments, the mean pore size of activated carbon starting material is from about 0.3 nm to about 10 nm; such as from about 0.5 nm to about 5 nm.

In embodiments, the ratio of microporous to mesoporous activated carbon starting material is about 0.5:1 or greater. Preferably, the ratio of microporous to mesoporous activated carbon starting material is about 1:1 or greater, about 1.5:1 or greater or about 2:1 or greater. Generally, the ratio of microporous to mesoporous activated carbon starting material is less than 10:1.

Activated carbon material may be functionalized with any suitable metal oxide material. According to the present invention, the metal oxide is a Group II metal oxide chosen from the group consisting of MgO and CaO. Activated carbon material may also be functionalized with other metal oxides, such as iron oxide, La₂O₃, ZnO, Al₂O₃, TiO₂. The metal oxide may be present in the functionalized material at any suitable weight percent. For example, the functionalized material preferably comprises from about 1% by weight to about 20% by weight metal oxide. More preferably, the functionalized material contains from about 2% by weight to about 10% by weight metal oxide. Most preferably, the functionalized material contains from about 3% by weight to about 8% by weight metal oxide. In embodiments, the functionalized material contains about 5% by weight metal oxide. As indicated in the Examples presented below, in some situations, the inventors found that higher amounts of metal oxide do not necessarily result in higher amount removal of selected smoke constituents. The amount of metal oxide on the functionalized material can be characterized by performing a mass balance of the production process of the functionalized material. The amount of metal oxide can also be determined by performing an elemental analysis on the functionalized material, for example a thermogravimetric analysis in which the material is completely combusted and the amount of metal oxide is quantified in the ash.

Activated carbon material may be functionalized with a metal oxide by any suitable process. In embodiments, activated carbon material is functionalized by contacting the activated carbon material with the metal oxide, or a precursor thereof, and heating the activated carbon and metal oxide, or precursor thereof, in a manner and degree sufficient to functionalize the activated carbon material with the metal oxide. As used herein, a "precursor of a metal oxide" is any metal containing compound that, when heated in an appropriate manner and degree converts to a metal oxide. Examples of suitable metal oxide precursors include Mₓ(NO₃)_{y}, Mₓ(OAc)_{y} and Mₓ(C₂O₄)_{y}, in some cases in their hydrated form (Mₓ(NO₃)_{y}·z(H₂O), Mₓ(OAc)_{y}·z(H₂O) and Mₓ(C₂O₄)_{y}·z(H₂O)) where M is the metal, x and y are the same or different and depend on the valence of the metal, OAc is acetate, and z is the degree of hydration, which can be any suitable number that yields a stable precursor material. One of skill in the art will understand that other metal containing compounds may be used as metal oxide precursors. Preferably, the metal oxide precursor is Mₓ(OAc)_{y} or Mₓ(NO₃)_{y}, or the hydrated forms thereof, or mixtures thereof. More preferably, the metal oxide precursor is Mₓ(NO₃)_{y}, or the hydrated form thereof.

The amount of metal oxide, or precursor thereof, used to functionalized the activated carbon may be varied to achieve the desired weight or mole percent of metal oxide in the metal-oxide functionalized activated carbon material, as will be generally understood by those of skill in the art.

In embodiments, a process for functionalizing activated carbon material with a metal oxide includes contacting the activated carbon material with the metal oxide, or a precursor thereof, in a range from about 1% by weight to about 20% by weight, relative to the weight of the activated carbon material. Multiple rounds or cycles of functionalization may be employed to achieve higher weight percentages of metal oxide in the functionalized material.

In embodiments, the activated carbon material and metal oxide, or precursor thereof, are heated at a temperature from about 250°C to 750°C. More preferably, the activated carbon and metal oxide, or precursor thereof, may be heated at a temperature from 300°C to 600°C, most preferably from about 350°C to 500°C. The temperature at which the activated carbon material and metal oxide or precursor thereof may vary depending on the metal used and the precursor used. The activated carbon material and metal oxide, or precursor thereof, may be present in a solvent when heated. Any suitable solvent may be used. For example, the solvent may comprise, consist essentially of, or consist of water, ethanol, or mixtures of water and ethanol.

The activated carbon material and metal oxide, or precursor thereof, which may be present in a solvent, are heated at the appropriate temperature for an amount of time sufficient to produce metal-oxide functionalized activated carbon material. In embodiments, the activated carbon material and metal oxide, or precursor thereof, are heated at the appropriate temperature for about 15 minutes or more; more preferably for about 30 minutes or more, most preferably about 1 hour or more. Generally, the activated carbon material and contacted metal oxide, or precursor thereof, are heated at the appropriate temperature for less than about 12 hours; preferably less than about 6 hours; more preferably less than about 3 hours.

In embodiments, the temperature at which the activated carbon material and metal oxide, or precursor thereof, are heated is ramped until the desired maximum temperature is reached. Any suitable temperature ramping profile may be employed. For example, the temperature maybe ramped from ambient temperature to the maximum desired temperature at a rate of from about 5°C per minute to about 10°C per minute, such as about 6°C per minute or about 8°C per minute.

The activated carbon material and metal oxide, or precursor thereof, may be heated under an inert atmosphere. For example, the activated carbon material and metal oxide, or precursor thereof, may be heated under a noble gas atmosphere, such as under an argon flow.

Metal oxide-functionalized activated carbon material may be used to selectively remove or capture one or more smoke constituents. For example, metal oxide-functionalized activated carbon material may selectively capture aldehydes, such as acetaldehyde. In embodiments, the metal oxide-functionalized activated carbon material captures at least about 1 weight % acetaldehyde, preferably at least about weight 2.5%, more preferably at least about 4 weight %. Typically, the functionalized activated carbon material will capture less than 20 weight percent acetaldehyde. As used herein, the "adsorption capacity" of a functionalized activated carbon material for a particular smoke constituent is the amount of the smoke constituent that the functionalized material captures, on a per weight percentage (weight of constituent captured per weight of metal oxide-functionalized activated carbon material). An example of a system and analytic method that may be used to determine adsorption capacity is described in more detail below in the Examples.

Selectivity of a metal oxide-functionalized activated carbon material may be evaluated by the ability of the functionalized material to capture increased amounts or percentages of a first constituent relative to one or more other constituents, when compared to corresponding non-functionalized material. For example, a metal oxide-functionalized activated carbon material may be considered to "selectively" capture a first smoke constituent relative to one or more other smoke constituents if the increase in capture of the first constituent due to functionalization is greater than the increase in capture of the one or more other constituents due to functionalization.

By way of example, if the functionalized material captures 1.2 times more of the first constituent than the non-functionalized material and if the functionalized material captures 1.05 times more of another constituent than the non-functionalized material, the functionalized material may be considered to selectively capture the first constituent relative to the other constituent. The ratio of the increased capture due to functionalization may be used as a measure of selectivity. For example, in the example presented above the ratio of the increase due to functionalization would be 1.2 to 1.05, or about 1.15 to 1. Preferably, the ratio of the increase in capture of one or more aldehyde due to functionalization relative to the increase in capture of one or more other smoke constituents due to functionalization is about 1.1 to 1 or greater, such as about 1.2 to 1 or greater, or about 1.3 to 1 or greater. Generally, the ratio of the increase in capture of one or more aldehyde due to functionalization relative to the increase in capture of one or more other smoke constituents due to functionalization will be about 20 to 1 or less, such as about 10 to 1 or less, about 5 to1 or less, or about 2 to 1 or less.

In embodiments, the ratio of the increase in capture of acetaldehyde due to metal oxide-functionalization of activated carbon material relative to the ratio of the increase in capture of benzene due to metal oxide-functionalization of activated carbon material relative is at least about 1.1 to 1; preferably at least about 1.2 to 1; and more preferably at least about 1.3 to 1.

Preferably, metal oxide functionalized activated carbon material captures more of one or more aldehyde, such as acetaldehyde, than corresponding non-functionalized activated carbon material, such as activated carbon material used as starting material for forming the functionalized activated carbon material. For example, metal oxide-functionalized activated carbon material may capture at least about 1.1 times of one or more aldehyde than corresponding non-functionalized activated carbon material. Preferably, the metal oxide-functionalized activated carbon material captures at least about 1.2 times of one or more aldehyde than corresponding non-functionalized activated carbon material. More preferably, the metal oxide-functionalized activated carbon material captures at least about 1.3 times of one or more aldehyde than corresponding non-functionalized activated carbon material. Preferably, the metal oxide-functionalized activated carbon material captures at least about 1.1 times or more, 1.2 times or more, or 1.3 times or more acetaldehyde than corresponding non-functionalized activated carbon material.

The ability of functionalized activated carbon material or non-functionalized activated carbon material to capture a smoke constituent may be evaluated in any suitable manner. One example experimental system that may be employed includes a flow of inert gas, to which a smoke constituent may be added. The functionalized or non-functionalized activated carbon material is placed in the flow path of the gas, which is in communication with a mass spectrometer. The gas flow may also bypass the activated carbon material to enter the mass spectrometer. The amount of smoke constituent captured by the activated carbon material may be determined by comparing the mass spectrometer results regarding the amount of constituent present in the flow through the activated carbon material relative to the amount of the constituent present in the flow that bypasses the activated carbon material. An example of a system and analytical method for carrying out such determinations is described in more detail below in the Examples.

One way to determine the ability of functionalized activated carbon material to capture one or more smoke constituents after the material has been incorporated into a smoking article is to remove the material from the smoking article and evaluate the removed functionalized activated carbon material as described above or as described in the Examples below.

Preferably, the metal-oxide functionalized activated carbon material selectively removes particular smoke constituents when incorporated into a smoking article as a filter, or a portion thereof, and when the smoking article is smoked. The functionalized activated carbon material may be included as a filter, or a portion thereof, of any suitable smoking article, as discussed above. For example, the smoking article may be a combustible smoking article, such as a cigarette. Other known smoking articles that may include a filter having metal-oxide functionalized activated carbon material include, for example, smoking articles in which an aerosol is generated by electrical heating or by the transfer of heat from a combustible fuel element or heat source to an aerosol generating substrate. During smoking, volatile compounds are released from the aerosol generating substrate by heat transfer from the heat source and entrained in air drawn through the smoking article. As the released compounds cool they condense to form an aerosol that is inhaled by the consumer. Other smoking articles that may include a filter having functionalized activated carbon material are those in which a nicotine-containing aerosol is generated from a tobacco material, tobacco extract, or other nicotine source, without combustion, and in some cases without heating, for example through a chemical reaction. Preferably, the metal oxide-functionalized activated carbon material is included in a combustible smoking article.

In embodiments, a method for capturing one or more smoke constituents includes (i) providing a filter element comprising activated carbon material functionalized with a metal oxide; and (ii) passing a gas stream including an aldehyde through the filter element to capture at least a portion of the aldehyde. The filter comprising the activated carbon material functionalized with a metal oxide may be a filter or filter element as described above or as described in the Examples below. For example, the filter may include a weight percent of the metal oxide relative to the activated carbon material as described above; the filter may selectively capture aldehydes, such as acetaldehyde; the functionalized activated carbon material may have a BET surface area as described herein, or any other features or functionalities described herein.

All scientific and technical terms used herein have meanings commonly used in the art unless otherwise specified. The definitions provided herein are to facilitate understanding of certain terms used frequently herein.

As used herein, the singular forms "a", "an", and "the" encompass embodiments having plural referents, unless the content clearly dictates otherwise.

As used herein, "or" is generally employed in its sense including "and/or" unless the content clearly dictates otherwise. The term "and/or" means one or all of the listed elements or a combination of any two or more of the listed elements.

As used herein, "have", "having", "include", "including", "comprise", "comprising" or the like are used in their open ended sense, and generally mean "including, but not limited to". It will be understood that "consisting essentially of", "consisting of", and the like are subsumed in "comprising," and the like.

The words "preferred" and "preferably" refer to embodiments of the invention that may afford certain benefits, under certain circumstances. However, other embodiments may also be preferred, for example under other circumstances. Furthermore, the recitation of one or more preferred embodiments does not imply that other embodiments are not useful, and is not intended to exclude other embodiments from the scope of the disclosure, including the claims.

Any discussion provided in this specification with regard to a filter or filter element that is not incorporated into a smoking article may be applied to a filter or filter element in a smoking article. Similarly, any discussion regarding a filter or filter element in a smoking article may be applied to a filter or filter element that is not included in a smoking article. For example, a discussion of adsorption capacity of a filter that is incorporated into a smoking article would apply to a filter that is not incorporated in a smoking article.

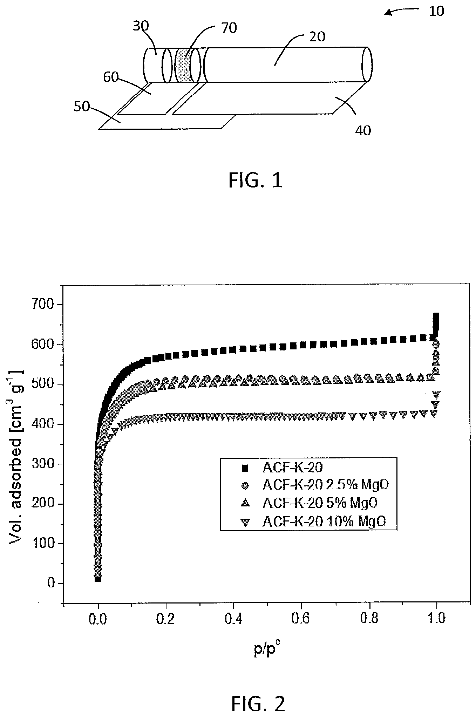

**FIG. 1** is a schematic perspective view of an embodiment of a partially unrolled smoking article. The smoking article depicted in **FIG.1** illustrates one or more embodiment of smoking articles or components of smoking articles described above. The schematic drawing is not necessarily to scale and is presented for purposes of illustration and not limitation. The drawing depicts one or more aspects described in this disclosure. However, it will be understood that other aspects not depicted in the drawing fall within the scope and spirit of this disclosure.

Referring now to **FIG. 1****,** a smoking article **10,** in this case a cigarette, is depicted. The smoking article **10** includes a rod **20,** such as a tobacco rod, and a mouth end filter segment **30.** A metal oxide-functionalized activated carbon filter segment **70** is disposed downstream of the rod **20** and upstream of the mouth end filter segment **30.** The depicted smoking article **10** includes a plug wrap **60** that circumscribes at least a portion of the filter segments **30, 70** and cigarette paper **40** that circumscribes at least a portion of the rod **20.** Tipping paper **50** or other suitable wrapper circumscribes the plug wrap **60** and a portion of the cigarette paper **40** as is generally known in the art.

**FIGS. 2-7** depict data obtained from various experiments performed to test the ability of metal oxide-functionalized to capture smoke constituents.

### Examples

Activated carbon fibres were functionalized with a number of metal oxides by heating the fibres in the presence of the metal oxides or precursors thereof. The ability of the metal oxide functionalized activated carbon fibres to capture various aldehydes was determined by a test system that included a flow of inert gas, to which a smoke constituents were added by gas generation. The material to be tested was placed in the flow path of the gas, which was in communication with a mass spectrometer. A bypass was employed to bypass the test material so that the gas could directly enter the mass spectrometer. The amount of smoke constituent captured by the activated carbon material was determined by comparing the mass spectrometer results regarding the amount of constituent present in the flow through the activated carbon material relative to the amount of the constituent present in the flow that bypasses the activated carbon material.

A volatile organic compound (VOC) adsorbate, such as acetaldehyde, was carried in the inert gas through the bypass line to the mass spectrometer for about 10 minutes to obtain a VOC baseline. A valve was then switched to cause the VOC (with carrier gas) to flow across the activated carbon fibres. An almost instantaneous decrease in the display of the mass spectrometer was observed. If adsorption was complete, the detection level reached zero. When the adsorption approached saturation, the detection level increased and returned to the baseline established through the bypass. The VOC was flowed across the activated carbon fibres for an additional 15 to 20 minutes following saturation.

Raw data was obtained with the mass spectrometer in counts per second versus time, for each chosen molecular mass. The response level is proportional to the concentration of the different masses analyzed. Therefore by knowing the inlet concentration of VOC, for example 80 ppmv, it is possible to link it to the resulting baseline obtained from the mass spectrometer. Therefore the total amount of VOC injected corresponds to the area under the baseline delimited by the beginning and the end of the injection. The quantity of adsorbate retained by the adsorbent is calculated by integrating the area above the adsorption curve. The brute curve was found to be relatively noisy and several treatments were applied to the data in order to perform a proper integration. An outline of the process used to obtain the capacity of the adsorbent is provided below:
1. Average on the raw data to obtain a smooth curve.
2. Numerical integration of the smoothed curve by using the trapezoid method. The total area under the adsorption curve corresponds to the amount of injected VOC which has not been adsorbed during the adsorption.
3. The total amount of VOC injected is calculated by multiplying the time of adsorption (at the 1^{st} point once the curve has raised up) by the response of the last adsorption value (therefore upper baseline value)
4. The difference between the total VOC injected and the total VOC not adsorbed gives the amount of VOC adsorbed.
5. The number of moles of VOC injected is calculated with the ideal gas law by knowing the flow rate, the concentration and the time of adsorption
6. Knowing the molar mass of the adsorbed compound, the mass adsorbed is determined
Finally by dividing the adsorbate mass by the adsorbent mass, the adsorption capacity was calculated.

The activated carbon fibres were functionalized with La₂O₃, ZnO, Al₂O₃, TiO₂, MgO, and CaO. These metal oxides were tested in the system described above. MgO and CaO captured relatively high amounts of aldehydes in this test and were selected for further analysis.

For a number of the studies performed, 5 weight % MgO-functionalized activated carbon fibres were prepared as follows: Activated carbon fibres ("ACF," K-20, Kynol Europa GmbH) were used as received. Technical ethanol was used as a solvent. 10 g of ACF (K-20) were impregnated with 24.5 g (29.2 ml) of a 12.8wt.% Mg(NO₃)₂·6H₂O (Merck, 99%) ethanolic solution. The material was dried in air at room temperature (3 hours) and then thermally treated in an electrically heated tubular oven at 400°C (ramp - 6°/min) for 1 hour in an Ar flow (200 ml/min). Without intending to be bound by theory, it is believed that Mg(NO₃)₂ undergoes decomposition at such temperatures under inert atmosphere rendering MgO. The prepared adsorbent is stored in a plastic zipper bag under ambient conditions. The weight percent of metal-oxide was determined by mass balance between the starting activated carbon material and the resulting metal-oxide functionalized activated carbon material. The result was confirmed by weighting the mineral matter (MgO) after air calcination of the metal-oxide functionalized activated carbon material at 750°C in air for 3 hours.

For a number of the studies performed, 5 weight % CaO-functionalized activated carbon fibres were prepared as follows: 10 g of (K-20, Kynol Europa GmbH) were impregnated with 24.6 g (29.7 ml) of a 8.6wt.% Ca(NO₃)₂·4H₂O (Fluka, 98%) ethanolic solution. The material was dried in air at room temperature (3 hours) and then thermally treated in an electrically heated tubular oven at 500°C (ramp - 8°/min) in an Ar flow (200 ml/min) for 1 hour. Without intending to be bound by theory, it is believed that Ca(NO₃)₂ undergoes decomposition at such temperatures under inert atmosphere rendering CaO. The prepared adsorbent is stored in a plastic zipper bag under ambient conditions.

Other weight % MgO- and CaO-functionalized fibres were prepared by altering the starting amount or concentration of Mg(NO₃)₂·6H₂O or Ca(NO₃)₂·4H₂O. Fibres other than ACFK-20 were used and prepared generally in accordance with the procedures described above, but with different fibres.

BET surface area analysis was performed using defined nitrogen partial pressure. The aim is to measure nitrogen adsorption capacity of the adsorbent at different partial pressure. Prior to analysis, the adsorbents were outgassed at 523 K for 2 h under vacuum. N₂ adsorption/desorption isotherms were performed at 77K over the relative pressure range 0.05 ≤ *P*/*P₀* ≤ 0.98.

**Table 1** below presents some characteristics of the resulting fibres.

**Table 1: Specific pore volume and specific surface area of fibres**

| Fibres | SSA_{BET} [m² g⁻¹] | Pore volume [cm³ g⁻¹] |
|---|---|---|
| ACF-K-20 | 2170 | 1.01 |
| ACF-K-20 (2.5% MgO) | 1940 | 0.87 |
| ACF-K-20 (5% MgO) | 1850 | 0.81 |
| ACF-K-20 (10% MgO) | 1590 | 0.69 |

As indicated in **Table 1,** heating the activated carbon fibres does not have an appreciable effect on porosity. However, deposition of metal oxide generally decreased the specific surface area of the fibres.

**FIG. 2****,** which is a graph showing nitrogen isotherms of non-functionalized ACF, 2.5 weight % MgO-functionalized ACF, 5 weight % MgO-functionalized ACF and 10 weight % MgO-functionalized ACF, shows the microporous nature of the functionalized and non-functionalized.

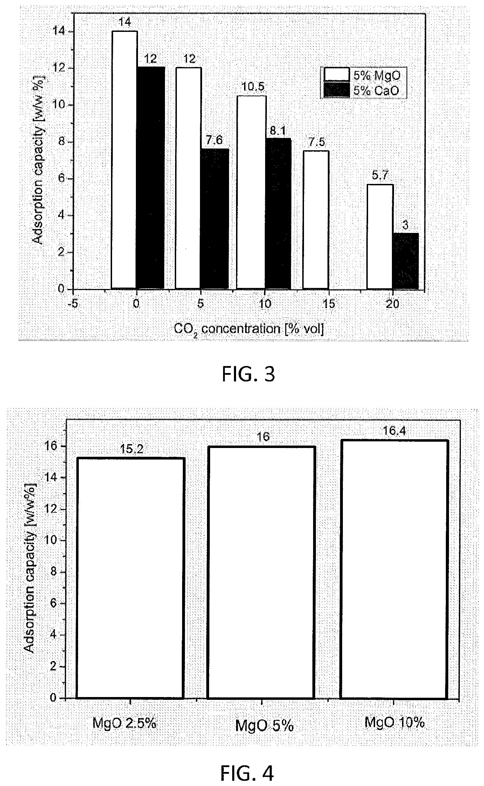

Referring now to **FIG. 3****,** a bar graph is presented showing the effects of CO₂ on acetaldehyde adsorption capacity of metal oxide functionalized activated carbon fibres. The results presented in **FIG. 3** were obtained from a test system as described above in which a mixture of helium and acetaldehyde or helium, acetaldehyde and carbon dioxide were passed across activated carbon fibres functionalized with 5% MgO or 5% CaO. As shown in **FIG. 3****,** CO₂ decreases the ability of the functionalized fibres to adsorb acetaldehyde in a dose dependent manner.

Referring now to **FIG. 4****,** a bar graph is presented showing the effect of metal oxide loading on adsorption capacity of acetaldehyde. The results presented in **FIG. 4** were obtained from a test system as described above in which a mixture of helium and acetaldehyde were passed across activated carbon fibres functionalized with 2.5%, 5%, or 10% MgO. As shown in **FIG. 4****,** the adsorption capacity of the fibres towards acetaldehyde does not appreciably increase with increased MgO loading.

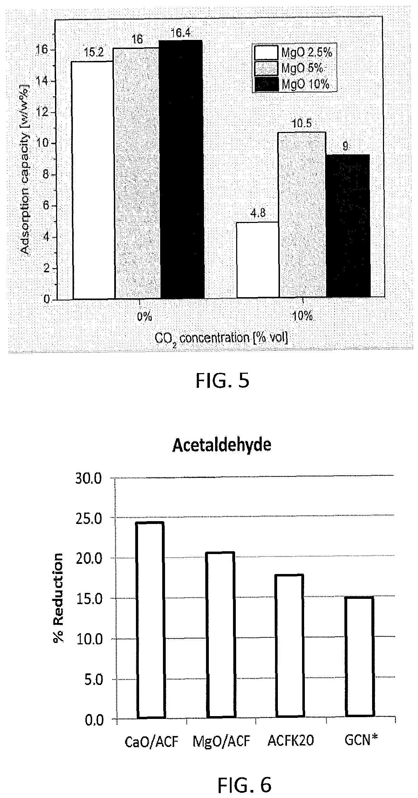

Referring now to **FIG. 5****,** a bar graph is presented showing the effect of CO₂ on acetaldehyde adsorption capacity of activated carbon fibres functionalized with different amounts of MgO. The results presented in **FIG. 5** were obtained from experiments performed generally as described with regard to **FIG. 3** above, except that the activated carbon fibres were functionalized with 2.5%, 5%, or 10% MgO. As shown in **FIG. 5****,** the deactivation effects of carbon dioxide were greatest with the lower MgO loading. Surprisingly, the deactivation effect of carbon dioxide was greater with 10% MgO than with 5% MgO. This may be relevant in the context of smoking articles, such as cigarettes, where a substantial amount of CO₂ is present in mainstream smoke.

Taken as a whole, the data presented in **FIGS. 3-5** would suggest that it is beneficial to functionalize activated carbon material with higher amounts of metal oxide to a certain point, but above this point increases may lead to lower performance, or at least minimal performance improvement.

The results presented in **FIGS. 3-5** resulted from an experimental test system in which gas containing a smoke constituent of interest was passed across functionalized activated carbon material. The effects of functionalized activated carbon material (5% MgO and 5% CaO) were also evaluated in smoking articles.

Briefly, handmade cigarettes were rolled. The cigarettes included a 27 mm long filter portion. In one set of cigarettes, the entire 27 mm long filter portion was formed from cellulose acetate tow (white). In other cigarettes, the filter included an 18 mm mouth end portion formed from cellulose acetate tow, a 3 mm central cavity filled with activated carbon material, and an adjacent 6 mm rod end portion formed from cellulose acetate tow. The 3 mm central cavity was filled with (i) activated carbon granules (GCN), (ii) activated carbon fibres (ACFK20), (iii) MgO-functionalized activated carbon fibres (MgO/ACF), or (iv) CaO-functionalized activated carbon fibres (CaO/ACF). The cigarettes were placed in a smoking apparatus and tested in accordance with the Health Canada standard.

**Table 2** below provides information regarding the cigarettes, adsorbent and resistance to draw (RTD). **FIGS. 6-7** show the effects of the various filter materials on the absorption of benzene and acetaldehyde.

**Table 2: Experimental cigarette filter components and resistance to draw**

| **Cigarette Name** | **Adsorbent (mg)** | **RTD (mm H₂O)** |
|---|---|---|
| White | - | 100 |
| CaO/ACF | 30 | 114 |
| MgO/ACF | 30 | 114 |
| ACFK20 | 30 | 111 |
| GCN | 60 | 110 |

As shown in **Table 2,** cigarettes having filters with activated carbon material or functionalized activated carbon material may be formed in a manner that does not significantly adversely impact resistance to draw, with only a modest increase observed.

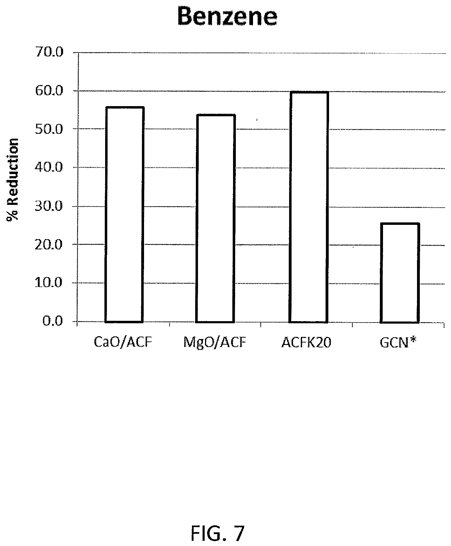

**FIGS. 6-7** show the % reduction relative to the "white" cigarette construction in which the entire filter length was composed of cellulose acetate tow for acetaldehyde **(****FIG. 6****)** and benzene **(****FIG. 7****).** As shown in **FIG. 6****,** the cigarettes containing metal oxide-functionalized material in the filter were more effective at reducing acetaldehyde in mainstream smoke than non-functionalized activated carbon, with CaO-functionalized material performing slightly better than MgO-functionalized material. It is worth noting that activated carbon fibres performed better than non-functionalized granulated activated carbon, despite twice as much non-functionalized granulated activated carbon being used. Similar trends were seen with acroleine, but with higher reductions (e.g., about 55% reduction with CaO/ACF, data not shown). With formaldehyde levels, MgO/ACF performed better than ACFK20, while CaO performed in a similar manner to ACFK20 (data not shown). In all cases non-functionalized activated carbon fibres outperformed non-functionalized activated carbon granules.

As shown in **FIG. 7****,** the metal oxide-functionalized activated carbon fibres reduced benzene levels to about the same extent as the non-functionalized activated carbon fibres. When compared to **FIG. 6****,** the results presented in **FIG. 7** reveal the selective ability of metal-oxide functionalized activated carbon material to capture acetaldehyde (and by extension other aldehydes).

## Claims

1. A combustible smoking article comprising:
a tobacco substrate; and
a filter for selective reduction of acetaldehyde in a mainstream smoke delivered to the user during use of the smoking article,
wherein the filter comprises activated carbon fibres functionalized with a metal oxide,
wherein the metal oxide is a Group II metal oxide, and wherein the metal oxide functionalized activated carbon fibres have a decreased BET surface area relative to a BET surface area of an activated carbon fibre starting material; wherein the Group II metal oxide is selected from the group consisting of MgO and CaO, wherein the metal oxide is present on the activated carbon fibres in a range from about 2% by weight to about 10% by weight, and wherein the functionalized activated carbon fibres have an adsorption capacity for acetaldehyde of about 5 w/w% or greater.

2. A combustible smoking article according to claim 1, wherein a BET surface area of the metal oxide functionalized activated carbon fibres is about 1000 m²/g or greater.

3. A combustible smoking article according to claim 1 or 2 wherein the activated carbon fibre starting material has a BET surface area from about 1700 m²/g to about 1900 m²/g and wherein the resulting metal oxide functionalized activated carbon fibres have a BET surface area that is at least 200 m²/g lower than the BET surface area of the activated carbon fibre starting material.

4. A combustible smoking article according to any one of claims 1-3 wherein the resulting metal oxide functionalized activated carbon fibres have a micropore to mesopore ratio from about 0.5:1 to about 1.5:1.

5. A combustible smoking article according to any one of claims 1-4 wherein the resulting metal oxide functionalized activated carbon fibres have a mean pore size from about 0.5 nm to about 5 nm.

6. A filter for use in a combustible smoking article, the filter for selectively reducing a concentration of acetaldehyde in a mainstream smoke delivered to a user during use of the smoking article, the filter comprising:
activated carbon fibres functionalized with a metal oxide, wherein the metal oxide is a Group II metal oxide, and wherein the metal oxide functionalized activated carbon fibres have a decreased BET surface area relative to a BET surface area of an activated carbon fibre starting material, wherein the Group II metal oxide is selected from the group consisting of MgO and CaO, wherein the metal oxide is present on the activated carbon fibres in a range from about 2% by weight to about 10% by weight, and wherein the functionalized activated carbon fibres have an adsorption capacity for acetaldehyde of about 5 w/w% or greater.

7. A process for preparing a metal oxide-functionalized activated carbon material for selective reduction of acetaldehyde in a mainstream smoke produced during use of a combustible smoking article, comprising:
contacting an activated carbon fibre starting material with a Group II metal oxide or a precursor thereof; and
heating the activated carbon fibre starting material with the metal oxide, or precursor thereof, to functionalize the activated carbon fibres of the activated carbon fibre starting material with the metal oxide and produce the metal-oxide-functionalized activated carbon material, wherein the metal oxide functionalized activated carbon fibres have a decreased BET surface area relative to a BET surface area of the activated carbon fibre starting material, wherein the Group II metal oxide is selected from the group consisting of MgO and CaO or wherein the precursor is configured to result in one of MgO and CaO, wherein the metal oxide is present on the activated carbon fibres in a range from about 2% by weight to about 10% by weight, and wherein the functionalized activated carbon fibres have an adsorption capacity for acetaldehyde of about 5 w/w% or greater.

8. A process according to claim 7, wherein the heating comprises heating at a temperature of between about 300°C and about 500°C.

9. A process according to claim 7 or 8, wherein a BET surface area of the metal oxide functionalized activated carbon fibres is about 1000 m²/g or greater.

10. A process according to any one of claims 7-9, further comprising incorporating the metal-oxide-functionalized activated carbon material into a filter for a combustible smoking article.

11. A method for selective reduction of acetaldehyde in a mainstream smoke produced during use of a combustible smoking article, the method comprising:
providing a filter element comprising activated carbon fibres functionalized with a Group II metal oxide selected from the group consisting of MgO and CaO, wherein the metal oxide functionalized activated carbon fibres have a decreased BET surface area relative to a BET surface area of an activated carbon starting fibres, wherein the metal oxide is present on the activated carbon fibres in a range from about 2% by weight to about 10% by weight, and wherein the functionalized activated carbon fibres have an adsorption capacity for acetaldehyde of about 5 w/w% or greater; and
passing a gas stream including an aldehyde produced during use of a smoking article through the filter element to capture at least a portion of the aldehyde.

## Patentansprüche

1. Brennbarer Rauchartikel, umfassend:
ein Tabaksubstrat; und
einen Filter zur selektiven Reduktion von Acetaldehyd in einem Hauptstromrauch, der dem Benutzer während des Gebrauchs des Rauchartikels zugeführt wird,
wobei der Filter mit einem Metalloxid funktionalisierte Aktivkohlefasern umfasst, wobei das Metalloxid ein Gruppe-II-Metalloxid ist und wobei die metalloxidfunktionalisierte Aktivkohlefasern einen verringerten BET-Flächenbereich in Bezug auf einen BET-Flächenbereich eines Aktivkohlefaser-Ausgangsmaterials aufweisen; wobei das Gruppe-II-Metalloxid aus der Gruppe ausgewählt ist bestehend aus MgO und CaO, wobei das Metalloxid auf den Aktivkohlefasern in einem Bereich von etwa 2 Gewichts-% bis etwa 10 Gewichts-% vorhanden ist, und wobei die funktionalisierten Aktivkohlefasern eine Adsorptionskapazität für Acetaldehyd von etwa 5 Gew.-% oder mehr aufweisen.

2. Brennbarer Rauchartikel nach Anspruch 1, wobei ein BET-Flächenbereich der metalloxidfunktionalisierten Aktivkohlefasern etwa 1000 m²/g oder mehr beträgt.

3. Brennbarer Rauchartikel nach Anspruch 1 oder 2, wobei das Aktivkohlefaser-Ausgangsmaterial einen BET-Flächenbereich von etwa 1700 m²/g bis etwa 1900 m²/g aufweist und wobei die resultierenden metalloxidfunktionalisierte Aktivkohlefasern einen BET-Flächenbereich aufweisen, der wenigstens 200 m²/g kleiner ist als der BET-Flächenbereich des Aktivkohlefaser-Ausgangsmaterials.

4. Brennbarer Rauchartikel nach einem der Ansprüche 1 bis 3, wobei die resultierenden metalloxidfunktionalisierte Aktivkohlefasern ein Verhältnis von Mikroporen zu Mesoporen von etwa 0,5:1 bis etwa 1,5:1 aufweisen.

5. Brennbarer Rauchartikel nach einem beliebigen der Ansprüche 1 bis 4, wobei die resultierenden metalloxidfunktionalisierten Aktivkohlefasern eine mittlere Porengröße von etwa 0,5 nm bis etwa 5 nm aufweisen.

6. Filter zum Gebrauch in einem brennbaren Rauchartikel, wobei der Filter zum selektiven Reduzieren einer Konzentration von Acetaldehyd in einem Hauptstromrauch dient, der einem Benutzer während des Gebrauchs des Rauchartikels zugeführt wird, der Filter umfassend:
mit einem Metalloxid funktionalisierte Aktivkohlefasern, wobei das Metalloxid ein Gruppe-II-Metalloxid ist und wobei die metalloxidfunktionalisierten Aktivkohlefasern einen verringerten BET-Flächenbereich in Bezug auf einen BET-Flächenbereich eines Aktivkohlefaser-Ausgangsmaterials aufweisen; wobei das Gruppe-II-Metalloxid aus der Gruppe ausgewählt ist bestehend aus MgO und CaO, wobei das Metalloxid auf den Aktivkohlefasern in einem Bereich von etwa 2 Gewichts-% bis etwa 10 Gewichts-% vorhanden ist, und wobei die funktionalisierten Aktivkohlefasern eine Adsorptionskapazität für Acetaldehyd von etwa 5 Gew.-% oder mehr aufweisen.

7. Verfahren zum Herstellen eines metalloxidfunktionalisierten Aktivkohlematerials zur selektiven Reduktion von Acetaldehyd in einem während des Gebrauchs eines brennbaren Rauchartikels erzeugten Hauptstromrauch, umfassend:
Inkontaktbringen eines Aktivkohlefaser-Ausgangsmaterials mit einem Gruppe-II-Metalloxid oder einem Vorläufer davon; und
Erwärmen des Aktivkohlefaser-Ausgangsmaterials mit dem Metalloxid oder einem Vorläufer davon, um die Aktivkohlefasern des Aktivkohlefaser-Ausgangsmaterials mit dem Metalloxid zu funktionalisieren und das metalloxidfunktionalisierte Aktivkohlematerial herzustellen, wobei die metalloxidfunktionalisierten Aktivkohlefasern einen verringerten BET-Flächenbereich in Bezug auf einen BET-Flächenbereich des Aktivkohlefaser-Ausgangsmaterials aufweisen, wobei das Gruppe-II-Metalloxid aus der Gruppe ausgewählt ist bestehend aus MgO und CaO oder wobei der Vorläufer ausgelegt ist, um zu einem von MgO und CaO zu führen, wobei das Metalloxid auf den Aktivkohlefasern in einem Bereich von etwa 2 Gewichts-% bis etwa 10 Gewichts-% vorhanden ist, und wobei die funktionalisierten Aktivkohlefasern eine Adsorptionskapazität für Acetaldehyd von etwa 5 Gew.-% oder mehr aufweisen.

8. Prozess nach Anspruch 7, wobei das Erwärmen ein Erwärmen auf eine Temperatur zwischen etwa 300 °C und etwa 500 °C umfasst.

9. Prozess nach Anspruch 7 oder 8, wobei der BET-Flächenbereich der metalloxidfunktionalisierten Aktivkohlefasern etwa 1000 m²/g oder mehr beträgt.

10. Prozess nach einem der Ansprüche 7 bis 9, ferner umfassend das Einarbeiten des metalloxidfunktionalisierten Aktivkohlematerials in einen Filter für einen brennbaren Rauchartikel.

11. Verfahren zur selektiven Reduktion von Acetaldehyd in einem während des Gebrauchs eines brennbaren Rauchartikels erzeugten Hauptstromrauch, das Verfahren umfassend:
Vorsehen eines Filterelements, das Aktivkohlefasern umfasst, die mit einem Gruppe-II-Metalloxid funktionalisiert sind, das ausgewählt ist aus der Gruppe bestehend aus MgO und CaO, wobei die metalloxidfunktionalisierten Aktivkohlefasern einen verringerte BET-Flächenbereich in Bezug auf einen BET-Flächenbereich von Aktivkohle-Ausgangsfasern aufweisen, wobei das Metalloxid auf den Aktivkohlefasern in einem Bereich von etwa 2 Gewichts-% bis etwa 10 Gewichts-% vorhanden ist, und wobei die funktionalisierten Aktivkohlefasern eine Adsorptionskapazität für Acetaldehyd von etwa 5 Gew.-% oder mehr aufweisen; und
Durchleiten eines Gasstroms, der ein bei Gebrauch eines Rauchartikels erzeugtes Aldehyd beinhaltet, durch das Filterelement, um wenigstens einen Teil des Aldehyds zu erfassen.

## Revendications

1. Article à fumer combustible comprenant :
un substrat de tabac ; et
un filtre pour la réduction sélective d'acétaldéhyde dans un flux principal de fumée distribué à l'utilisateur pendant l'utilisation de l'article à fumer,
dans lequel le filtre comprend des fibres de charbon actif fonctionnalisées avec un oxyde métallique, dans lequel l'oxyde métallique est un oxyde métallique du groupe II, et dans lequel les fibres de charbon actif fonctionnalisées par oxyde métallique ont une surface spécifique selon BET diminuée par rapport à une surface spécifique selon BET d'un matériau de départ de fibre de charbon actif ; dans lequel l'oxyde métallique du groupe II est choisi dans le groupe constitué par MgO et CaO, dans lequel l'oxyde métallique est présent sur les fibres de charbon actif dans une plage d'environ 2 % en poids à environ 10 % en poids, et dans lequel les fibres de charbon actif fonctionnalisées ont une capacité d'adsorption pour l'acétaldéhyde d'environ 5 % p/p ou plus.

2. Article à fumer combustible selon la revendication 1, dans lequel une surface spécifique selon BET des fibres de charbon actif fonctionnalisées par oxyde métallique est d'environ 1000 m²/g ou plus.

3. Article à fumer combustible selon la revendication 1 ou 2 dans lequel le matériau de départ de fibre de charbon actif a une surface spécifique selon BET d'environ 1700 m²/g à environ 1900 m²/g et dans lequel les fibres de charbon actif fonctionnalisées par oxyde métallique résultantes ont une surface spécifique selon BET qui est inférieure d'au moins 200 m²/g à la surface spécifique selon BET du matériau de départ de fibre de charbon actif.

4. Article à fumer combustible selon l'une quelconque des revendications 1 à 3, dans lequel les fibres de charbon actif fonctionnalisées par oxyde métallique résultantes ont un rapport entre micropores et mésopores d'environ 0,5:1 à environ 1,5:1.

5. Article à fumer combustible selon l'une quelconque des revendications 1 à 4, dans lequel les fibres de charbon actif fonctionnalisées par oxyde métallique résultantes ont une taille moyenne de pore d'environ 0,5 nm à environ 5 nm.

6. Filtre pour une utilisation dans un article à fumer combustible, le filtre étant destiné à réduire sélectivement une concentration d'acétaldéhyde dans un flux principal de fumée distribué à un utilisateur pendant l'utilisation de l'article à fumer, le filtre comprenant :
des fibres de charbon actif fonctionnalisées avec un oxyde métallique, dans lequel l'oxyde métallique est un oxyde métallique du groupe II, et dans lequel les fibres de charbon actif fonctionnalisées par oxyde métallique ont une surface spécifique selon BET diminuée par rapport à une surface spécifique selon BET d'un matériau de départ de fibre de charbon actif, dans lequel l'oxyde métallique du groupe II est choisi dans le groupe constitué par MgO et CaO, dans lequel l'oxyde métallique est présent sur les fibres de charbon actif dans une plage d'environ 2 % en poids à environ 10 % en poids, et dans lequel les fibres de charbon actif fonctionnalisées ont une capacité d'adsorption pour l'acétaldéhyde d'environ 5 % p/p ou plus.

7. Processus de préparation d'un matériau de charbon actif fonctionnalisé par oxyde métallique pour la réduction sélective d'acétaldéhyde dans un flux principal de fumée produit pendant l'utilisation d'un article à fumer combustible, comprenant :
la mise en contact d'un matériau de départ de fibre de charbon actif avec un oxyde métallique du groupe II ou un précurseur de celui-ci ; et
le chauffage du matériau de départ de fibre de charbon actif avec l'oxyde métallique, ou le précurseur de celui-ci, pour fonctionnaliser les fibres de charbon actif du matériau de départ de fibre de charbon actif avec l'oxyde métallique et produire le matériau de charbon actif fonctionnalisé par oxyde métallique, dans lequel les fibres de charbon actif fonctionnalisées par oxyde métallique ont une surface spécifique selon BET diminuée par rapport à une surface spécifique selon BET du matériau de départ de fibre de charbon actif, dans lequel l'oxyde métallique du groupe II est choisi dans le groupe constitué par MgO et CaO ou dans lequel le précurseur est configuré pour donner l'un parmi MgO et CaO, dans lequel l'oxyde métallique est présent sur les fibres de charbon actif dans une plage d'environ 2 % en poids à environ 10 % en poids, et dans lequel les fibres de charbon actif fonctionnalisées ont une capacité d'adsorption pour l'acétaldéhyde d'environ 5 % p/p ou plus.

8. Processus selon la revendication 7, dans lequel le chauffage comprend un chauffage à une température d'entre environ 300 °C et environ 500 °C.

9. Processus selon la revendication 7 ou 8, dans lequel la surface spécifique selon BET des fibres de charbon actif fonctionnalisées par oxyde métallique est d'environ 1000 m²/g ou plus.

10. Processus selon l'une quelconque des revendications 7 à 9, comprenant en outre l'incorporation du matériau de charbon actif fonctionnalisé par oxyde métallique dans un filtre pour un article à fumer combustible.

11. Procédé de réduction sélective d'acétaldéhyde dans un flux principal de fumée produit pendant l'utilisation d'un article à fumer combustible, le procédé comprenant :
la fourniture d'un élément filtrant comprenant des fibres de charbon actif fonctionnalisées avec un oxyde métallique du groupe II choisi dans le groupe constitué par MgO et CaO, dans lequel les fibres de charbon actif fonctionnalisées par oxyde métallique ont une surface spécifique selon BET diminuée par rapport à une surface spécifique selon BET d'une fibre de départ de charbon actif, dans lequel l'oxyde métallique est présent sur les fibres de charbon actif dans une plage d'environ 2 % en poids à environ 10 % en poids, et dans lequel les fibres de charbon actif fonctionnalisées ont une capacité d'adsorption pour l'acétaldéhyde d'environ 5 % p/p ou plus ; et
le passage d'un flux de gaz comportant un aldéhyde produit pendant l'utilisation d'un article à fumer à travers l'élément filtrant pour capturer au moins une portion de l'aldéhyde.
